# FASCICULE DE BREVET EUROPEEN

(11) **EP 0 458 677 B1**
(45) Date de publication et mention de la délivrance du brevet: **27.07.1994**
(21) Numéro de dépôt: 91401256.2
(22) Date de dépôt: 15.05.1991
(51) Int. Cl.: B64G 1/44

(54) **Dispositif limiteur de couple et appendice déployable d'engin spatial équipé de ce dispositif**
Drehmomentbegrenzungseinrichtung und entfaltbares Verlängerungsstück eines, mit einer solchen Einrichtung ausgerüsteten, Raumflugkörpers
Torque limiting device and unfolding appendix of a space missile equipped with such a device

(30) Priorité: 17.05.1990 FR 9006171
(43) Date de publication de la demande: 27.11.1991
(73) Titulaire: AEROSPATIALE Société Nationale Industrielle, 75781 Paris Cédex 16 (FR)
(72) Inventeur: Vezain, Gérard, F-06210 Mandelieu (FR); Auternaud, Jacques, F-06250 Mougins (FR); Viale, Daniel, F-83440 Fayence (FR)
(74) Mandataire: Poulin, Gérard

(56) Documents cités:
- FR-A- 2 635 077

## Description

L'invention concerne un dispositif limiteur de couple conçu pour être monté dans un appendice déployable d'engin spatial, par exemple dans un générateur solaire de satellite. L'invention concerne également un appendice déployable comprenant un ou plusieurs dispositifs limiteurs de couple ainsi conçus.

Les engins spatiaux tels que les satellites sont habituellement équipés d'un certain nombre d'appendices déployables tels que des générateurs solaires, des réflecteurs d'antennes, des mâts, etc... Pendant toute la phase du lancement du satellite, ces appendices sont maintenus dans une position repliée afin, d'une part, de réduire l'encombrement et, d'autre part, d'éviter de les endommager. Le maintien des appendices dans cette position repliée est assuré par des dispositifs de gerbage constitués, par exemple, par des boulons traversant les différents panneaux constituant chaque générateur solaire.

Lorsque le satellite est placé sur orbite, des cisailles pyrotechniques sont déclenchées afin de couper les boulons de gerbage et de libérer les générateurs solaires ou les appendices similaires. Le déploiement proprement dit est alors assuré par des organes élastiques montés dans les charnières qui relient chacun des panneaux du générateur solaire.

Dans les articulations de type classique, ces moyens élastiques sont constitués par des ressorts de torsion qui exercent entre les panneaux adjacents un couple de déploiement relativement élevé. Pour éviter que des chocs trop importants ne se produisent en fin de déploiement, on est donc amené à réguler la vitesse de déploiement des panneaux, le plus souvent en synchronisant le déploiement des différents panneaux constituant les générateurs solaires, comme l'illustre notamment le document FR-A-2 371 343.

Dans le document FR-A-2 635 077, on a proposé une articulation d'un type différent, dans laquelle les moyens élastiques sont constitués par des bandes élastiques préformées, à section en arc de cercle, qui engendrent un couple de déploiement parfaitement connu et qui peut être relativement faible. Par ailleurs, les frottements sont pratiquement supprimés par le fait que l'articulation comprend deux ferrures qui roulent l'une sur l'autre en étant guidées par des lames métalliques flexibles sur lesquelles est exercée une précontrainte de traction.

La conception originale de cette dernière articulation permet généralement de supprimer tout système de régulation de la vitesse de déploiement et de synchronisation du déploiement des différents panneaux entre eux. La suppression de ces mécanismes complexes améliore la fiabilité du déploiement. Cependant, dans le cas de générateurs solaires de grandes dimensions et devant supporter, une fois déployés, des couples orbitaux imposant une rigidité minimale particulièrement élevée, l'absence de toute régulation et de tout synchronisme peut conduire à un choc très important (correspondant par exemple à un couple de 220 Nm) lors du verrouillage des panneaux en fin de déploiement. En effet, les efforts engendrés lors du verrouillage sont d'autant plus importants que la rigidité de l'appendice déployé est importante. S'il est trop élevé, ce choc de verrouillage peut détériorer l'appendice et le rendre inopérant.

L'invention a précisément pour objet un dispositif limiteur de couple conçu de façon à pouvoir être utilisé en association avec une articulation de type quelconque, et notamment du type décrit dans le document FR-A-2 635 077, afin de limiter le choc de verrouillage tout en assurant la rigidité désirée de l'appendice déployé et un positionnement relatif précis des différents éléments de ce dernier, sans qu'il soit nécessaire d'avoir recours à des mécanismes de régulation ou de synchronisation complexes.

Conformément à l'invention, ce résultat est obtenu au moyen d'un dispositif limiteur de couple pour un appendice déployable d'engin spatial, comprenant un élément et une articulation adjacente, ce dispositif étant caractérisé par le fait qu'il comprend l'élément de l'appendice déployable, une platine de l'articulation adjacente à cet élément, des moyens élastiques de rappel appliquant avec une force prédéterminée une surface de contact dudit élément en appui direct ou indirect contre une surface de contact de la platine, et des moyens de positionnement assurant un positionnement relatif constant desdites surfaces l'une par rapport à l'autre, lorsqu'elles reviennent en appui l'une contre l'autre sous l'action des moyens élastiques de rappel, après un décollement relatif entre ces surfaces.

Un dispositif ainsi conçu permet, par exemple, d'abaisser le couple supporté par l'articulation, lors du verrouillage en fin de déploiement, de 220 Nm à environ 70 Nm. De plus, il assure un positionnement relatif précis et reproductible des différents éléments de l'appendice déployé, tout en garantissant la rigidité minimale requise pour ce dernier.

Avantageusement, des moyens de réglage sont associés aux moyens élastiques de rappel, afin de permettre un ajustement de la force prédéterminée appliquée par ces moyens élastiques de rappel (force qui détermine le décollement des deux surfaces).

Dans un mode de réalisation préféré de l'invention, ces moyens élastiques de rappel sont des moyens élastiques précontraints tels qu'un empilement de rondelles élastiques montées sur au moins une tige traversant des trous alignés formés dans les deux pièces que constituent ledit élément et ladite platine, les moyens élastiques précontraints étant comprimés entre deux surfaces d'appui en vis-à-vis formées sur la tige et sur une première desdites pièces, alors que la tige prend appui sur une troisième surface d'appui formée sur la deuxième pièce.

Dans ce même mode de réalisation préféré de l'invention, les moyens de positionnement comprennent au moins une lame flexible dont deux parties latérales opposées, orientées parallèlement à un axe de l'articulation, sont fixés respectivement sur ledit élément et sur la platine, par exemple par au moins deux vis ajustées.

Avantageusement, chacune des parties opposées de la lame flexible est terminée par un bord tombé qui améliore la rigidité de la lame dans sa zone de fixation.

L'invention a aussi pour objet un appendice déployable d'engin spatial, comprenant au moins deux éléments reliés entre eux par une articulation, caractérisé par le fait qu'un dispositif limiteur de couple tel que défini précédemment est placé entre chaque articulation et l'un au moins des éléments adjacents.

Un mode de réalisation préféré de l'invention va à présent être décrit, à titre d'exemple non limitatif, en se référant aux dessins annexés, dans lesquels :
- la figure 1 est une vue en coupe transversale représentant une articulation fixée sur deux panneaux adjacents d'un générateur solaire de satellite par l'intermédiaire de dispositifs limiteurs de couple conformes à l'invention ;
- la figure 2 est une vue en coupe comparable à la figure 1 illustrant à plus grande échelle l'un des dispositifs limiteurs de couple par lesquels l'articulation est montée sur les panneaux ; et
- les figures 3A à 3C sont des vues en coupe schématique comparables à la figure 1 illustrant trois étapes successives du déploiement d'un générateur solaire dont les articulations sont équipées de dispositifs limiteurs de couple conformes à l'invention.

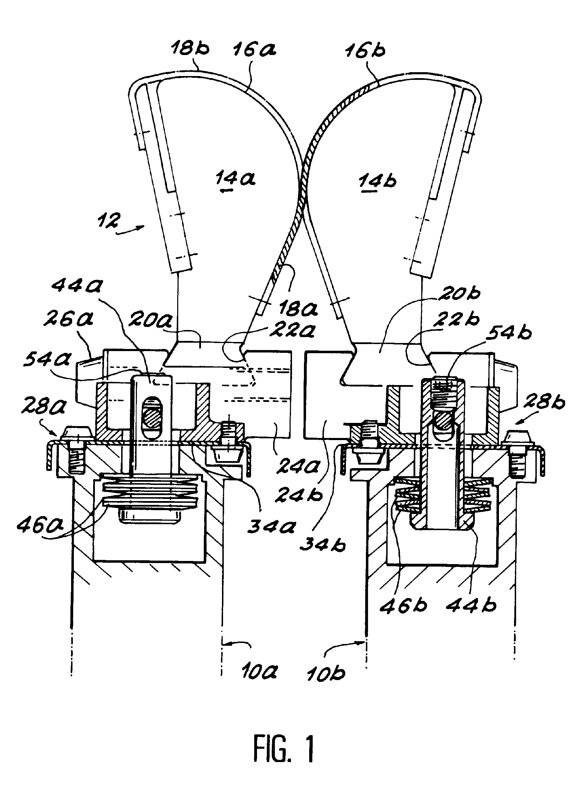

Sur la figure 1, les références 10a et 10b désignent deux panneaux consécutifs d'un générateur solaire porté par un satellite. Ces panneaux 10a et 10b sont illustrés dans leur position de gerbage qu'ils occupent jusqu'à la mise sur orbite du satellite. Dans cette position, les panneaux (dont'le nombre peut être supérieur à deux) sont repliés l'un contre l'autre et orientés parallèlement l'un à l'autre.

Les bords adjacents des panneaux 10a et 10b sont reliés par une articulation désignée de façon générale par la référence 12. Dans le mode de réalisation représenté, cette articulation est réalisée conformément aux enseignements du document FR-A-2 635 077. Pour une description détaillée de cette articulation, on se reportera donc utilement à ce document.

Conformément aux enseignements de ce document, l'articulation 12 comprend deux ferrures 14a et 14b présentant des surfaces cylindriques adjacentes 16a et 16b aptes à rouler l'une contre l'autre en étant guidées dans ce mouvement de roulement par des lames métalliques flexibles 18a et 18b, par exemple au nombre de quatre. Ces lames métalliques flexibles sont placées entre les surfaces 16a et 16b et agencées de façon à se croiser entre les ferrures, les extrémités de chacune des lames étant fixées respectivement sur chacune des ferrures, comme l'illustre la figure. Des moyens (non représentés) permettent d'exercer sur chacune des lames métalliques flexibles 18a et 18b une précontrainte de traction évitant le décollement des ferrures lors de leur roulement l'une sur l'autre.

Des bandes élastiques préformées (non représentées) sont par ailleurs fixées par leurs extrémités sur les ferrures 14a et 14b, de façon à exercer entre ces dernières, lorsque le générateur solaire est replié, un couple de rotation qui commande le déploiement automatique de l'articulation 12. Les bandes élastiques assurent également le verrouillage de l'articulation en position déployée. Ces bandes élastiques présentent normalement en section la forme d'un arc de cercle et elles sont fixées sur les ferrures de façon à présenter une forme rectiligne lorsque les'panneaux 10a et 10b sont alignés à la fin du déploiement du générateur solaire.

Dans le mode de réalisation illustré sur les figures, chacune des ferrures 14a et 14b comporte un talon 20a et 20b à section en forme de queue d'aronde, reçu dans une rainure complémentaire 22a, 22b formée dans une platine 24a, 24b. Chacune des platines 24a et 24b est avantageusement réalisée en deux parties reliées par des vis 26a, 26b, ce qui facilite le montage et le démontage des ferrures 14a et 14b.

Conformément à l'invention, les platines 24a et 24b sont montées sur les bords d'extrémité adjacents des panneaux 10a et 10b par des dispositifs limiteurs de couple désignés de façon générale par les références 28a et 28b sur la figure 1. Il est à noter que dans certains cas, l'un de ces deux dispositifs limiteurs de couple peut être supprimé et la platine correspondante fixée directement sur le panneau adjacent.

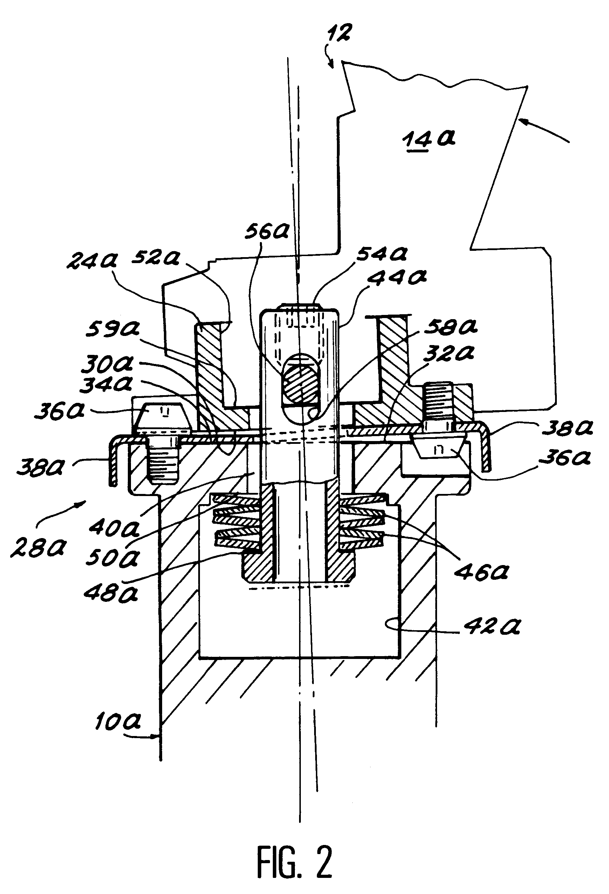

Les deux dispositifs limiteurs de couple 28a et 28b étant identiques, seul l'un d'entre eux va à présent être décrit plus en détail en se référant à la figure 2, qui représente plus précisément le dispositif 28a par lequel la platine 24a portant la ferrure 14a est fixée sur le panneau 10a.

Du côté tourné vers le panneau 10a, la platine 24a comporte une surface plane de contact 30a. De même, le bord du panneau 10a tourné vers la platine 24a définit une surface plane de contact 32a. Entre ces surfaces de contact 30a et 32a est placée une lame flexible 34a, de forme généralement plane et rectangulaire, dont les parties latérales opposées orientées parallèlement à l'axe de l'articulation 12 (c'est-à-dire ici à la génératrice commune aux surfaces 16a et 16b) sont fixées respectivement sur le panneau 10a et sur la platine 24a. Plus précisément, la partie latérale de la lame flexible 34a la plus éloignée du panneau 10b (figure 1) est fixée sur la surface de contact 32a du panneau 10a, alors que la partie latérale de la lame flexible 34a la plus proche du panneau 10b est fixée sur la platine 24a.

La fixation de chacune des deux parties latérales de la lame flexible 34a respectivement sur le panneau 10a et sur la platine 24a, est réalisée à l'aide d'au moins deux vis 36a. Ces vis sont de préférence des vis ajustées, c'est-à-dire que les parties adjacentes à leur tête sont des parties cylindriques calibrées qui sont reçues dans des trous calibrés correspondants formés dans la lame flexible 34a, dans le panneau 10a et dans la platine 24a. Lorsque la lame est au repos et occupe une position parfaitement plane entre les surfaces de contact 30a et32a, cet agencement permet de garantir un positionnement relatif particulièrement précis entre le panneau 10a et la platine 24a selon deux directions orthogonales contenues dans le plan de joint entre le panneau 10a et la platine 24a. La lame flexible 34a constitue ainsi un moyen de positionnement relatif entre les surfaces de contact 30a et 32a.

Comme l'illustre également la figure 2, des parties en creux sont avantageusement formées dans le panneau 10a et dans la platine 24a, pour recevoir les têtes des vis 36a par lesquelles la lame flexible 34a est fixée sur ces deux pièces.

Par ailleurs, les bords des parties latérales opposées de la lame flexible 34a, fixées respectivement dans le panneau 10a et dans la platine 24a, sont repliés à angle droit au-delà des faces du panneau 10a pour former des bords tombés 38a. Ces bords tombés 38a permettent d'éviter que la lame flexible 34a ne se déforme au voisinage des vis de fixation 36a lorsque la lame est soumise à des contraintes en fin de déploiement.

Selon une direction perpendiculaire au plan de la figure 2, la platine 24a, la lame flexible 34a et le panneau 10a sont traversés par des trous alignés 40a qui débouchent dans un évidement 42a à l'intérieur du panneau 10a. Chacun de ces trous alignés 40a reçoit une tige cylindrique 44a sur laquelle est placé, à l'intérieur de l'évidement 42a, un empilement de rondelles élastiques 46a telles que des rondelles Belleville. Plus précisément, ces rondelles élastiques 46a sont placées entre un épaulement 48a formé à proximité de l'extrémité de la tige 44a reçue dans l'évidement 42a et une surface d'appui 50a formée autour du trou 40a dans l'évidement 42a.

L'extrémité opposée de la tige cylindrique 44a, qui fait saillie dans une partie en creux 52a de la platine 24a, comporte selon son axe un trou taraudé dans lequel est reçue une vis sans tête 54a. L'extrémité de cette vis 54a est en appui sur une barre d'appui 56a qui traverse radialement la tige 44a, au travers d'une ouverture oblongue 58a, allongée selon l'axe de la tige 44a. Plus précisément, la barre d'appui 56a traverse radialement toutes les tiges 44a reçues dans les trous alignés 40a, et elle est en appui sur une surface d'appui 59a constituée par le fond de la partie en creux 52a de la platine 24a.

Grâce à l'agencement qui vient d'être décrit, on comprend qu'en vissant plus ou moins la vis sans tête 54a dans chacune des tiges 44a, on règle à volonté la précontrainte emmagasinée dans l'empilement de rondelles élastiques 46a monté sur cette tige. L'empilement de rondelles élastiques 46a constitue ainsi un moyen élastique de rappel permettant d'appliquer avec une force de placage prédéterminée la surface de contact 32a du panneau 10a contre la surface de contact 30a de la platine 24a, au travers de la lame flexible 34a. Cette force de placage confère à l'appendice déployé la rigidité requise et détermine le couple maximum qui peut être transmis au travers du dispositif 28a sans que celui-ci ne se déforme.

Bien entendu, le nombre des rondelles élastiques 46a placées sur chacune des tiges 44a, de même que le nombre de tiges montées entre la platine et le panneau correspondant peut être modifiés afin de permettre d'accroître ou de diminuer la force de placage exercée par le dispositif conforme à l'invention. La seule limite à ces deux nombres est fixée par la place disponible, quine peut pas être accrue de façon illimitée.

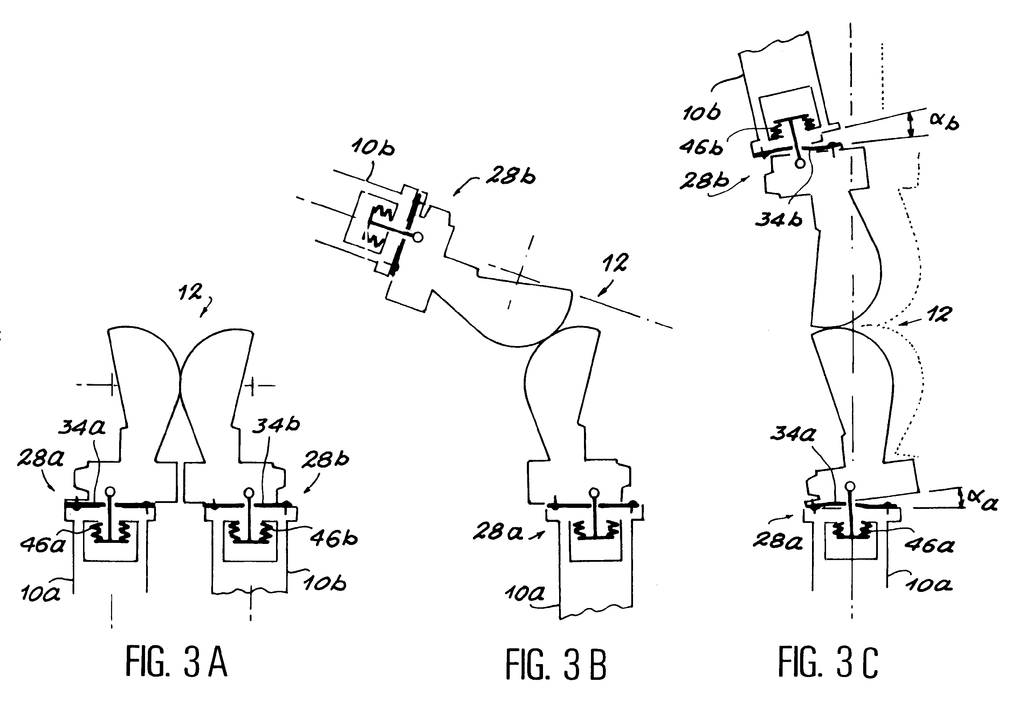

Comme on l'a déjà mentionné en référence à la figure 1, et comme l'illustre également de façon très schématique la figure 3A, les panneaux 10a et 10b occupent au moment du lancement et jusqu'à la mise en orbite du satellite des positions repliées sensiblement parallèles. Dans ces conditions, les dispositifs limiteurs de couple 28a et 28b ne jouent aucun rôle, c'est-à-dire que les platines de l'articulation 12 sont appliquées contre les bords des panneaux 10a et 10b sous l'action de la précontrainte emmagasinée dans les rondelles élastiques 46a et 46b.

Lorsque la mise sur orbite est réalisée, les mécanismes de gerbage du générateur solaire sont libérés, généralement sous l'action d'un dispositif pyrotechnique, de sorte que le générateur solaire commence à se déployer sous l'action des bandes élastiques (non représentées) de l'articulation 12. Cette phase de déploiement est illustrée très schématiquement sur la figure 3B. Elle n'a aucune incidence sur les dispositifs limiteurs de couple 28a et 28b qui restent dans les positions décrites précédemment.

En fin de déploiement et comme l'illustre la figure 3C, l'articulation 12 se verrouille instantanément sous l'action des bandes élastiques (non représentées), de sorte qu'un choc qui peut être relativement important se trouve transmis aux panneaux 10a et 10b par l'intermédiaire des dispositifs limiteurs de couple 28a et 28b. Les lames flexibles 34a et 34b, relativement souples, permettent alors aux surfaces de contact de l'articulation 12 et des panneaux 10a et 10b de décoller dans un mouvement de pivotement qui prolonge le mouvement de déploiement du générateur solaire au-delà de la position finale d'alignement des panneaux. Ce mouvement de pivotement, représenté par les angles αₐ et α_{b} pour les dispositifs 28a et 28b sur la figure 3C, a pour effet de comprimer les empilements de rondelles élastiques 46a et 46b, qui absorbent l'énergie du choc. Le couple maximum, supporté par les platines de l'articulation et par les panneaux est proportionnel à l'effort maximum qu'exercent alors les empilements de rondelles élastiques et au bras de leur levier séparant le point d'application de cet effort du point de pivotement des surfaces de contact 32a et 34a.

Les empilements de rondelles élastiques 46a et 46b rappellent instantanément les panneaux 10a et 10b et l'articulation 12 vers leur position finale d'alignement, autour de laquelle l'ensemble de ces pièces peut osciller plusieurs fois avant d'atteindre cette position, sous l'effet de l'amortissement du système, dû notamment aux frottements. La raideur des empilements de rondelles élastiques 46a et 46b permet alors d'assurer une rigidité d'ensemble du générateur solaire déployé répondant aux objectifs souhaités.

Par ailleurs, la reproductibilité du positionnement relatif entre les panneaux déployés est assurée avec une grande précision par les lames flexibles 34a et 34b qui se trouvent pincées en position statique entre les platines de l'articulation et le bord adjacent de chacun des panneaux.

Les dispositifs limiteurs de couple conformes à l'invention permettent donc d'absorber une partie de l'énergie qui serait normalement supportée par les différentes pièces constituant le générateur solaire lors du verrouillage des articulations en position déployée, tout en préservant la rigidité d'ensemble du générateur solaire ainsi qu'un alignement précis et reproductible des différents panneaux qui le constituent.

Bien entendu, l'invention n'est pas limitée au mode de réalisation qui vient d'être décrit à titre d'exemple, mais en couvre toutes les variantes définies dans les revendications.

Ainsi, on rappellera tout d'abord que si le dispositif limiteur de couple selon l'invention est particulièrement adapté pour être placé entre les différents panneaux et les articulations d'un générateur solaire de satellite, il peut être utilisé de la même manière sur tout appendice déployable d'engin spatial tel que des réflecteurs d'antenne, des mâts, etc... De plus, le dispositif limiteur de couple selon l'invention peut être utilisé quelle que soit la nature de l'articulation qui relie les différents éléments de l'appendice déployable et chaque articulation peut être associée à un ou plusieurs de ces dispositifs, selon la quantité d'énergie à absorber en fin de déploiement et l'énergie qu'il est possible d'absorber avec un dispositif en fonction du volume qui lui est alloué.

Par ailleurs, le dispositif limiteur de couple peut être réalisé de façon différente, les empilements de rondelles élastiques pouvant notamment être remplacés par des ressorts de compression hélicoïdaux ou par des amortisseurs hydrauliques ou pneumatiques.

De façon comparable, les lames flexibles qui assurent un positionnement relatif constant et reproductible des différents éléments de l'appendice déployé peuvent être remplacées par des moyens de positionnement techniquement équivalents tels que des surfaces de guidage complémentaires formées respectivement sur les platines et sur les bords adjacents des éléments de l'appendice, de façon à ramener ces deux pièces automatiquement dans une position relative bien précise à la fin du mouvement d'oscillation qui intervient lors du verrouillage en fin de déploiement. La solution à lame flexible est cependant préférée, car elle assure une liaison mécanique réelle entre les deux pièces et supprime tout frottement ainsi que tout risque de blocage dans une position différente de la position finale recherchée.

La lame flexible décrite peut aussi être remplacée par plusieurs lames flexibles voisines dont les parties latérales opposées sont fixées en au moins deux points sur chacune des pièces. Chacun des dispositifs peut notamment comprendre plusieurs lames flexibles fixées de façon croisée sur chacune des pièces, ce qui permet de garantir qu'au moins l'une des lames travaille à la traction quel que soit le sens du pivotement relatif entre la platine et l'élément adjacent de l'appendice déployable. Le comportement au flambage des lames flexibles est ainsi amélioré, notamment lorsque ces lames sont soumises à des charges de cisaillement très élevées dans les deux sens.

La fixation de chacune des lames sur les deux pièces peut également être réalisée d'une manière différente, le positionnement et la fixation pouvant notamment être réalisés de façon distincte en ayant recours à des vis de fixation classique et à des pions de centrage reçus dans des trous ajustés.

Enfin, la structure permettant d'appliquer les deux pièces l'une contre l'autre sous l'action de l'empilement de rondelles élastiques ou du moyen élastique équivalent peut être différente de la structure décrite, de même que les moyens de réglage de la précontrainte de ces moyens élastiques qui peuvent être dans certains cas supprimés ou remplacés par des moyens techniquement équivalents.

## Revendications

1. Dispositif limiteur de couple, pour un appendice déployable d'engin spatial comprenant un élément (10a,10b) et une articulation (12) adjacente, ce dispositif étant caractérisé par le fait qu'il comprend l'élément (10a,10b) de l'appendice déployable, une platine (24a) de l'articulation (12) adjacente à cet élément, des moyens élastiques de rappel (46a,46b) appliquant avec une force prédéterminée une surface de contact (32a) dudit élément en appui direct ou indirect contre une surface de contact (30a) de la platine (24a), et des moyens de positionnement (34a,34b) assurant un positionnement relatif constant desdites surfaces l'une par rapport à l'autre, lorsqu'elles reviennent en appui l'une contre l'autre sous l'action des moyens élastiques de rappel, après un décollement relatif entre ces surfaces.

2. Dispositif selon la revendication 1, caractérisé par le fait que les moyens élastiques de rappel (46a,46b) sont associés à des moyens de réglage (54a) de ladite force prédéterminée.

3. Dispositif selon l'une quelconque des revendications précédentes, caractérisé par le fait que les moyens élastiques de rappel (46a,46b) sont des moyens élastiques précontraints montés sur une tige (44a) traversant des trous alignés (40a) formés dans les deux pièces que constituent ledit élément et ladite platine, lesdits moyens élastiques précontraints étant comprimés entre deux surfaces d'appui (48a,50a) en vis-à-vis formées sur ladite tige et sur une première (10a) desdites pièces, alors que la tige prend appui sur une troisième surface d'appui formée sur la deuxième pièce (24a).

4. Dispositif selon les revendications 2 et 3 combinées, caractérisé par le fait que les moyens élastiques précontraints (46a,46b) sont montés sur une partie d'extrémité de la tige logée dans un évidement (42a) formé dans ledit élément, les moyens de réglage comprenant une vis (54a) reçue dans un trou taraudé formé axialement dans l'extrémité opposée de la tige, ladite vis prenant appui sur une barre d'appui (56a) qui traverse un trou radial (58a) formé dans ladite tige, de façon à appliquer cette barre d'appui contre la troisième surface d'appui.

5. Dispositif selon l'une quelconque des revendications 3 et 4, caractérisé par le fait que les moyens élastiques précontraints comprennent un empilement de rondelles élastiques (46a).

6. Dispositif selon l'une quelconque des revendications précédentes, caractérisé par le fait que les moyens de positionnement comprennent au moins une lame flexible (34a) dont deux parties latérales opposées orientées parallèlement à un axe de l'articulation sont fixées respectivement sur ledit élément et sur la platine.

7. Dispositif selon la revendication 6, caractérisé par le fait que chacune desdites parties opposées de la lame flexible (34a) est fixée par au moins deux vis ajustées (36a).

8. Dispositif selon l'une quelconque des revendications 6 et 7, caractérisé par le fait que chacune desdites parties opposées de la lame flexible (34a) est terminée par un bord tombé (38a).

9. Appendice déployable d'engin spatial, comprenant au moins deux éléments (10a, 10b) reliés entre eux par une articulation (12), caractérisé par le fait qu'un dispositif limiteur de couple (28a, 28b) selon l'une quelconque des revendications précédentes est placé entre chaque articulation et l'un au moins des éléments adjacents.

## Patentansprüche

1. Drehmomentbegrenzungsvorrichtung für ein entfaltbares Verlängerungsstück eines Raumflugkörpers, welches ein Bauteil (10a, 10b) und eine angrenzende Gelenkverbindung (12) aufweist, **dadurch gekennzeichnet, daß** sie umfaßt:
das Bauteil (10a, 10b) des entfaltbaren Verlängerungsstückes, eine neben diesem Bauteil liegende Platte (24a) der Gelenkverbindung (12), elastische Rückstellvorrichtungen (46a, 46b), die eine Kontaktfläche (32a) des Bauteiles mit einer vorbestimmten Kraft in direkte oder indirekte Auflage mit einer Kontaktfläche (30a) der Platte (24a) bringen, und Einstellvorrichtungen (34a, 34b), die ein relatives konstantes Einstellen der Oberflächen zueinander gewährleisten, wenn sie gegeneinander unter Einwirkung der elastischen Rückstellvorrichtungen, nach relativem Ablösen dieser Oberflächen voneinander zur Auflage kommen.

2. Vorrichtung nach Anspruch 1, **dadurch gekennzeichnet,** **daß** die elastischen Rückstellvorrichtungen (46a, 46b) mit Regelvorrichtungen (54a) mit der vorbestimmten Kraft verbunden sind.

3. Vorrichtung nach einem der vorhergehenden Ansprüche, **dadurch** **gekennzeichnet,** **daß** die elastischen Rückstellvorrichtungen (46a, 46b) elastisch vorgespannte Vorrichtungen sind, die auf einem Stift (44a) angebracht sind, der ausgerichtete Bohrungen (40a) durchläuft, die in den zwei Teilen gebildet sind, welche das Bauteil und die Platte bilden, wobei die elastisch vorgespannten Vorrichtungen zwischen zwei gegenüberliegenden Stützflächen (48a, 50a), die auf dem Stift und auf einem ersten Bauteil (10a) gebildet sind, zusammengedrückt werden, während der Stift auf einer dritten Stützfläche, die auf dem zweiten Bauteil (24a) gebildet ist, zur Auflage kommt.

4. Vorrichtung nach den Ansprüchen 2 und 3, **dadurch** **ge****kennzeichnet, daß** die elastisch vorgespannten Vorrichtungen (46a, 46b) auf einem Endteil des Stiftes angebracht sind, der in einer Aussparung (42a) gelagert ist, welche in dem Bauteil gebildet ist, wobei die Regelvorrichtungen eine Schraube (54a) beinhalten, welche in einer Gewindebohrung aufgenommen wird, die axial in dem gegenüberliegenden Ende des Stiftes ausgebildet ist, wobei die Schraube auf einer Stützstange (56a) zur Auflage kommt, die eine in dem Stift gebildete Querbohrung (58a) derart durchläuft, daß sich diese Stützstange gegen die dritte Auflagefläche abstützt.

5. Vorrichtung nach einem der Ansprüche 3 und 4, **dadurch** **gekennzeichnet, daß** die elastisch vorgespannten Vorrichtungen einen Stapel von Federringen (46a) umfassen.

6. Vorrichtung nach einem der vorhergehenden Ansprüche, **dadurch gekennzeichnet, daß** die Einstellvorrichtungen mindestens eine Federplatte (34a) aufweisen, deren zwei sich seitlich gegenüberliegende Teile, die parallel zu einer Achse der Gelenkverbindung ausgerichtet sind, jeweils auf dem Bauteil und auf der Platte befestigt sind.

7. Vorrichtung nach Anspruch 6, **dadurch gekennzeichnet,** **daß** jedes der gegenüberliegenden Teile der Federplatte (34a) durch mindestens zwei eingepaßte Schrauben (36a) befestigt ist.

8. Vorrichtung nach einem der Ansprüche 6 und 7, **dadurch** **gekennzeichnet, daß** jedes der gegenüberliegenden Teile der Federplatte (34a) durch einen abgebogenen Rand (38a) begrenzt wird.

9. Entfaltbares Verlängerungsstück eines Raumflugkörpers, das mindestens zwei miteinander durch ein Gelenk (12) verbundene Bauteile (10a, 10b) aufweist, **dadurch ge****kennzeichnet, daß** eine Drehmomentbegrenzungsvorrichtung (28a, 28b) nach einem der vorhergehenden Ansprüche zwischen jedem Gelenk und mindestens einem der angrenzenden Teile angeordnet ist.

## Claims

1. Torque limiter device for an unfolding spacecraft appendage, incorporating an element (10a, 10b) and an adjacent joint (12), said device being characterized in that it comprises the element (10a, 10b) of the unfolding appendage, a plate (24a) of the joint (12) adjacent to said element, elastic recall means (46a, 46b) applying with a predetermined force a contact surface (32a) of said element in direct or indirect bearing against a contact surface (30a) of the plate (24a), and positioning means (34a, 34b) ensuring a constant relative positioning of said surfaces with respect to one another, when they return to a bearing position against one another under the action of the elastic recall means, following a relative separation between said surfaces.

2. Device according to claim 1, characterized in that the elastic recall means (46a, 46b) are associated with means (54a) for adjusting said predetermined force.

3. Device according to any one of the preceding claims, characterized in that the elastic recall means (46a, 46b) are prestressed elastic means mounted on a rod (44a) traversing aligned holes (40a) formed in the two pieces constituting said element and said plate, said prestressed elastic means being compressed between two support surfaces (48a, 50a) opposite each other formed on said rod and on the first (10a) of said pieces, whereas the rod takes support on a third support surface formed on the second piece (24a).

4. Device according to claims 2 and 3 combined, characterized in that the prestressed elastic means (46a, 46b) are mounted on one end portion of the rod housed in a recess (42a) formed in said element, the adjustment means including one screw (54a) received in a tapped hole formed axially in the opposite end of the rod, said screw being supported on a support bar (56a) which traverses a radial hole (58a) formed in said rod so as to apply said support bar against the third support surface.

5. Device according to either of the claims 3 and 4, characterized in that prestressed means include a stack of elastic washers (46a).

6. Device according to any one of the preceding claims, characterized in that the positioning means include at least one flexible plate (34a), whose two opposing lateral portions orientated parallel to a hinge pin are secured to said element and to the plate respectively.

7. Device according to claim 6, characterized in that each of said opposing portions of the flexible plate (34a) is fixed by at least two adjusted screws (36a).

8. Device according to either of the claims 6 and 7, characterized in that each of said opposing portions of the flexible plate (34a) is terminated by a cutoff edge (38a).

9. Unfolding appendage of a spacecraft including at least two elements (10a, 10b) interconnected by a joint (12), characterized in that a torque limiter device (28a, 28b) according to any one of the preceding claims is placed between each joint and at least one of the adjacent elements.
